(19) Europäisches Patentamt
European Patent Office
Office européen des brevets

(11) **EP 4 386 690 A1**

(12) **EUROPEAN PATENT APPLICATION**

(43) Date of publication:
**19.06.2024 Bulletin 2024/25**

(21) Application number: **22212770.6**

(22) Date of filing: **12.12.2022**

(51) International Patent Classification (IPC):
*G06V 10/26* (2022.01)    *G06V 10/30* (2022.01)
*G06V 10/82* (2022.01)    *G06V 10/80* (2022.01)
*G06V 10/88* (2022.01)

(52) Cooperative Patent Classification (CPC):
**G06V 10/267; G06V 10/30; G06V 10/774;**
**G06V 10/82; G06V 20/70;** G06V 2201/034

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
  • **WIEMKER, Rafael**
    **Eindhoven (NL)**
  • **NICKISCH, Hannes**
    **Eindhoven (NL)**
  • **BONTUS, Claas**
    **5656AG Eindhoven (NL)**

  • **BROSCH, Tom**
    **Eindhoven (NL)**
  • **MATUTE FLORES, Jose Alejandro**
    **Eindhoven (NL)**
  • **HEESE, Harald Sepp**
    **Eindhoven (NL)**
  • **ORSEL, Joke**
    **Eindhoven (NL)**
  • **PETERS, Jochen**
    **Eindhoven (NL)**
  • **RABOTNIKOV, Mark**
    **Eindhoven (NL)**
  • **WEESE, Rolf Juergen**
    **Eindhoven (NL)**

(74) Representative: **Philips Intellectual Property &**
**Standards**
**High Tech Campus 52**
**5656 AG Eindhoven (NL)**

(54) **BILATERAL CROSS FILTERING OF SEMANTIC CLASS PROBABILITIES**

(57)    System (SYS) and related method for refining an image segmentation result. The system comprises an input interface or receiving a prior segmentation result segmented by an initial segmentor (SEG). The result includes an input structural image, and an input class map associated with the structural image. The input class map assigns image elements of the input structural image to classes. A refiner (RF) refines the input class map, based on subsets of the input structural image, into a refined class map for the input structural image to so obtain the refined segmentation result.

FIG. 1

EP 4 386 690 A1

**Description**

FIELD OF THE INVENTION

The invention relates to a system for refining an image segmentation result, to a related method, to an imaging arrangement, to a computer program element and to a computer readable medium.

BACKGROUND OF THE INVENTION

Semantic segmentation relates to voxel-wise labeling of image, such as volumes, into certain discrete classes (labels). A labeling can be represented in various ways, e.g., by meshes or voxel grids, etc., and mutual transformations.
Precise segmentations are beneficial, e.g., for surgical planning (e.g., cardiac valve replacement), as well as for pre-operative risk mitigation or biopsy risk mitigation (avoiding organs at risk, vessels, miniscule [cardiac] nerve bundles, etc.).
Semantic segmentation may be computer implemented based on, for example, geometrical models (MBS) or machine learning (ML) based models or approaches. Such models or approaches are designed to achieve very robust global results. They are often trained with respect to graceful degradation and wide applicability. rather than case-specific accuracy. Therefore, their local accuracy as to a specific image instance, is sometimes limited by their strong regularization on a wide, general case base, leading to small delineation (boundaries, interfaces, course of edges in images, etc) imperfections carved out by the segmentations. Such imperfections are, however, not motivated by the specific local appearance of the image instance at hand, but rather by implicit or explicit global model assumptions, constraints or regularizations, etc. In a specific medical application, a certain class distinction provided by the general model may not be of interest. Imperfections introduced by unneeded "over-segmentation".

SUMMARY OF THE INVENTION

There may therefore be a need for more efficient use of segmentation modules, or segmentation results, obtained by such segmentor modules.
An object of the present invention is achieved by the subject matter of the independent claims where further embodiments are incorporated in the dependent claims. It should be noted that the following described aspect of the invention equally applies to the related method, to the imaging arrangement, to the computer program element and to the computer readable medium.
According to a first aspect of the invention there is provided a system for refining an image segmentation result, comprising:

an input interface for receiving a prior segmentation result segmented by an initial segmentor, the result including an input structural image, and an input class map associated with the structural image, the input class map assigning image elements of the input structural image to classes;
a refiner configured to refine the input class map, based on subsets of the input structural image, into a refined class map for the input structural image to so obtain the refined segmentation result; and
output for providing the refined segmentation result.

In particular, a single such input structural image may be used.
The class map may relate to labels that represent such classes. Preferably, the class map relates to per image element (voxel, pixel, or groups of either) probabilities or probability distributions, or family parameters of such probability distributions. The probabilities values, or distributions thereof, describe the probability for such an image element of input image to represent ("belong") to such a class of classes. Binary maps are not excluded herein, but there may be more than to classes. The classes relate to in general to medical features, such as anatomical, physiological or metabolism features. Thus, refiner and training may operate on such probabilities, probability distributions as a whole per image element.
The refiner in general effects a redistribution of class labels or probabilities or of probability mass as captured in the initial segmentation result.
In embodiments, the refiner includes a training system configured to train a machine learning model as a new segmentor based on training data including i) the subsets and ii) the input class map. The training is preferably done on the fly, that is, is started when initial result is received and finishes prior to output of refined segmentation. That is, refiner is not in general trained when initial segmentation result is incoming.
Implementation of the system may be parallelized for better responsiveness and to better effect such on-the-fly training.

In embodiments, the machine learning model of the refiner is any one of: i) a classifier, ii) regressor, iii) clusterer. In particular, the clusterer may be based on k-means clustering.

In embodiments, the refiner is to apply the new segmentor to the input structural image to obtain the refined segmentation result having the refined class map.

Thus, in embodiments, a machine learning (ML)-based algorithm is applied to train model or learn from data on-the-fly, preferably on a single case of appearance image and initial segmentation. Then an inference/deployment yields a new refined segmentation.

Exemplary further technical embodiments of ML, include any one of: i) feature-based iterative classifiers in general (such as local k-means, Expectation Maximization), ii) feature-based regressors (e.g., RF[ random forest], SVM[support vector machine]), iii) patch-based variational autoencoders, iv) graph-cut-based image segmentations, and others.

In some embodiments, instead of using ML, or in addition thereto, the refiner is configured to apply an image filter to the structural input image using filter weights in neighborhoods as per the subsets, and the refiner is further to co-filter (cross-filter), based on the weights, the input class map treated as an image, to so obtain the refined class map of the refined segmentation result. The weights may be dynamically adapted when image location when filtering the structural image, and such adapted weights are fed though for filtering the class map.

In embodiments, said image filter is configured for structure-preserving noise filtering. In embodiments, the said filter is a bilateral filter.

In embodiments, the system includes a control interface configured to control medical equipment based on the refined segmentation result.

In embodiments, the system includes a display device for displaying the refined segmentation result. The refined segmentation result may be displayed jointly or in sequentially with the earlier input segmentation to aid in comparing the two. Differences may be highlighted automatically, as required.

In another aspect there is provided a medical arrangement including the system of as per any of the above, and further including any one or more of: i) an imaging apparatus providing the input structural image, ii) the initial segmentor.

In another aspect there is provided a computer-implemented method of refining an image segmentation result, comprising:

receiving a prior segmentation result segmented by an initial segmentor, the result including an input structural image, and an input class map associated with the structural image, the input class map assigning image elements of the input structural image to classes;

refining the input class map, based on subsets of the input structural image, into a refined class map for the input structural image to so obtain the refined segmentation result; and

providing the refined segmentation result.

In another aspect there is provided a computer program element, which, when being executed by at least one processing unit, is adapted to cause the processing unit to perform the method.

In another aspect there is provided, at least one computer readable medium having stored thereon the program element, or having stored thereon the trained machine learning model.

Thus, what is proposed herein is a coupling of an [optionally multi-spectral] appearance image with a multi-class probability image, where the local smoothing/diffusion of the local class probabilities is guided by the edge-preserving smoothing of the appearance image.

In departure from known ML training schemes, what is proposed herein is a training of a regressor or auto-encoder or any other ML model, on-the-fly, on a multitude of patches (or all voxels) on a single newly incoming appearance image against its initial class probabilities.

For example, when using k-means or similar ML clustering approaches, the proposed system uses a local clustering (such as k-means or other), where class centers are trained individually for each voxel, using, for example, a Gaussian-weighted local neighborhood around each voxel, respectively.

The proposed system and method may be conceptualized as post-processing of extant segmentation results, provided by whichever means, in order to individualize, thus refine, the extant segmentation thereby taking the induvial structural features of the specific, given image in the earlier segmentation result inro account, in most cases, a redistribution of the earlier class labels is effected, thus possibly laying bare unexpected, new edge or border configuration that were clouded by the earlier segmentation as the processing there was too generic for the peculiarities of the specific case represented by the underlying image subject of the earlier segmentation.

The class labels of the semantic segmentation for medical purposes as mainly envisaged herein may relate to different tissue types, to different organ types, different body fluids, fluid/tissue vs air interface, tissue v air interfaces, different organs type or groups of such organ types, interfaces between organ types, boundaries, edges, etc.

Advantages of the proposed system and related method include:

- no interactive segmentation refinement is required by the medical user - the proposed approach can operate if desire fully automatically;
- the proposed algorithmic post-processing delivers a task-specifically improved segmentation without requiring a massive ML re-training on a multitude of cases. Data procurement and annotation effort, as well a as regulatory approval may be less costly to achieve for this algorithmic technique.

Some embodiments may be practiced with respect to (3D) voxel-grid representations or segmentations, but pixelwise segmentation in 2D is not excluded herein, and neither are coarser, lower resolution representations in terms of chunks/regions of pixels or voxels.

The proposed method may be used in imaging workstations, PACS-viewers, or other image-based systems to facilitate diagnosis and or surgical planning (e.g., of structural heart disease, SHD or Valvular Heart Disease, VHD, or of biopsy path planning, or automated organ-specific quantification (e.g. calcium burden, perfusion), and many other clinical tasks that rely on in-image measurements.

Whilst embodiments herein are mainly described and illustrated with respect to CT (computed tomography), this is in no way limiting, as the proposed system and method are of equal application in the same manner also for other relevant cardiac 3D modalities such as MRI, US, PET/SPECT, PET, or for tomographic imaging in general. Applications to 2D radiographic projection imaging, or other 2D modalities, are also contemplated herein. What is more, whilst illustrations are drawn mainly from cardiac structures of interest and cardiac application scenarios, the proposed system and method are equally applicable to any other organ, tissues or anatomical structure of interest. Having said that, processing of cardiac imagery and processing with cardiac applications in mind is specifically envisaged herein in embodiments.

*"user"* relates to a person, such as medical personnel or other, operating the imaging apparatus or overseeing the imaging procedure. In other words, the user is in general not the patient.

In general, the term *"machine learning"* includes a computerized arrangement (or module) that implements a machine learning ("ML") algorithm. Some such ML algorithms operate to adjust a machine learning model that is configured to perform ("learn") a task. Other ML operate direct on training data, not necessarily using such as model. This adjusting or updating of training data corpus is called "training". In general task performance by the ML module may improve measurably, with training experience. Training experience may include suitable training data and exposure of the model to such data. Task performance may improve the better the data represents the task to be learned. *"Training experience helps improve performance if the training data well represents a distribution of examples over which the final system performance is measured"*. The performance may be measured by objective tests based on output produced by the module in response to feeding the module with test data. The performance may be defined in terms of a certain error rate to be achieved for the given test data. See for example, T. M. Mitchell, "Machine Learning", page 2, section 1.1, page 6 1.2.1, McGraw-Hill, 1997.

"Model", in particular in relation to ML modeling may include explicit modeling based on adapting parameters of a model (such as in artificial neural networks ( (A)NN's ). Implicit modeling is also envisaged herein, where it is the training data set itself (optionally including, or augmented by, some descriptors or structuring), that represents the model, and such descriptors or structuring may be adapted, such as in clustering or other approaches. Some type of modelling may be "hybrid", so may include elements of both, explicit and implicit modelling, as required.

In relation to *"image processing"* as used herein, it is observed that any processing of imagery V or class map P, or of other spatial data structure or functions, as envisaged and described herein, in whichever embodiment and configuration or setup, includes, not only processing in image domain of image values or class map values, but such "image processing" reference, be it explicit or implicit, specifically includes processing in transform domain, such as in frequency domain, or any other domain in which the image V or map P is transformed first, and at least a part of the processing takes place there, with optional re-transforming into image/class map domain, as required. Transforms envisaged herein include any Fourier based transform (Laplace transform, Discrete cosine transform, etc), Wavelet-transform (eg, Haar transform), Hilbert transforms, Distance transform, etc.

*"image value(s)"*: in any of the processing considered herein, in addition to a scalar voxel-wise values (e.g., brightness, HU-density, etc), more features such as multi-spectral CT, MR, local means, derivatives, central moments, etc. can be used as needed.

BRIEF DESCRIPTION OF THE DRAWINGS

Exemplary embodiments of the invention will now be described with reference to the following drawings, which, unless stated otherwise, are not to scale, wherein:

Fig. 1 shows a medical image processing arrangement using image segmentation operations;

Fig. 2 illustrates a segmentation result conceptually;

Fig. 3 illustrates constructing new training data for use in refining existing segmentation results;

Fig. 4 is a block diagram of a refiner system in various embodiments as may be used for refining existing segmentation results;

Fig. 5 shows a machine learning training system as may be used by the segmentation refiner as proposed herein in some embodiments;

Fig. 6 shows a flow chart of a computer implemented method of refining an existing segmentation result;

Fig. 7 is a flow chart of a machine learning training method that may be used in the method of Fig. 6 in some embodiments; and

Fig. 8 is an illustration of refined segmentation results as may be achievable by the proposed segmentation result refiner as envisaged herein in embodiments.

## DETAILED DESCRIPTION OF EMBODIMENTS

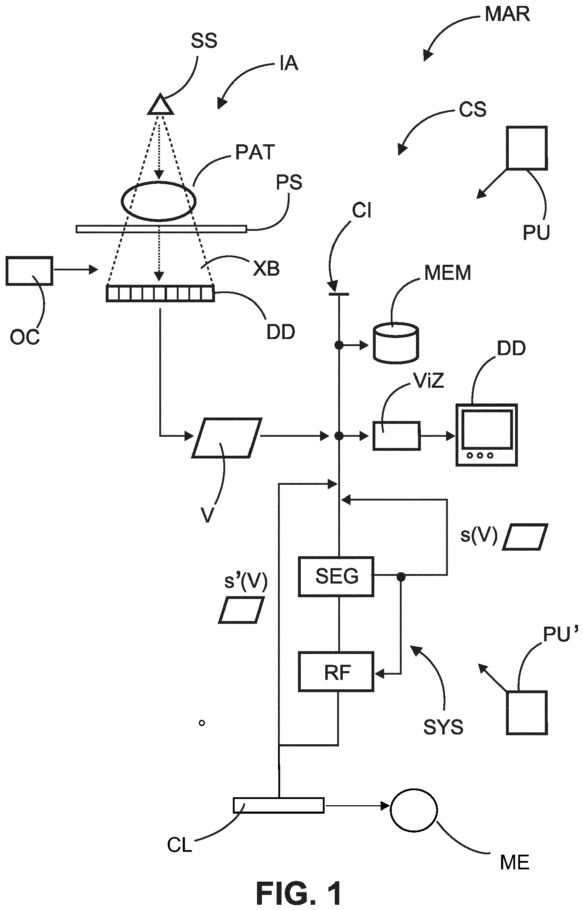

Reference is now made to Fig. 1, which shows a block diagram of a medical arrangement MAR for processing medical data, in particular medical imagery V of a patient. Broadly, the arrangement may include a medical imaging apparatus IA configured to produce imagery V with respect to a region of interest ("ROI") of a patient PAT, such as of specific one or more organs, one or more tissues, anatomies, etc.

The imagery V may be processed by a computing system CS, arranged to run on one or more computing platforms. Processing of such imagery is manifold, and may include any one more of the following actors and acts: the imagery V may be stored on memory MEM, it may be image processed by an image processing module, visualized by visualizer VIZ on a display device DD, etc. The imagery V may be passed from imager IA to a communication network CL to any of the said actors, or others processing actors.

The imagery V of interest may include a reconstructed volume, or one or more slices thereof, a radiograph, etc, or any other 3D or 2D image data.

One such image processing module may include a segmentor SEG, a processing module arranged in software or hardware, or partly in both, that is configured to segment the imagery V into a segmentation result $s = s(V)$. Segmentation is an image processing operation where voxel, pixels or other image elements (regions of such voxels or pixels) are classified into classes, represented by labels (numbers, symbols, references, etc).

Broadly, what is proposed herein is to use a segmentation refiner system SYS that allows re-using or refining such an extant segmentation result s for other clinical objects or purpose, different to the one for which the segmentor SEG was originally designed and configured for. Specifically, the segmentation result s can be retuned, or refined, to so make more explicit medical details that are more relevant to a given task, and that, so far, lay latent in the segmentation result as it currently is. The given, current task, may differ from the task for which the segmentation s was computed in the first place. Such extant segmentation result(s) s can be found in medical databases or other repositories of medical data, such as maintained by medical facilities of all kind.

Before explaining operation of the arrangement MAR in more detail, and in particular of refiner system SYS, some components of the imaging apparatus IA will be explained first to better lay out context in which the system may be used.

Generally, the imaging apparatus IA may include a signal source SS and a detector device DD. The signal source SS generates a signal, for example an interrogating signal, which interacts with the patient to produce a response signal which is then measured by the detector device DD and converted into measurement data such as the said medical imagery. One example of the imaging apparatus or imaging device is an X-ray based imaging apparatus such as a radiography apparatus, configured to produce protection imagery. Volumetric tomographic (cross sectional) imaging is not excluded herein, such as via a C-arm imager or a CT (computed tomography) scanner, or other.

During an imaging session, patient PAT may reside on a patient support PS (such as patient couch, bed, etc), but this is not necessary as the patient may also stand, squat or sit or assume any other body posture in an examination region during the imaging session. The examination regions is formed by the portion of space between the signal source SS and the detector device DD.

For example, in a CT setting, during imaging session, X-ray source SS rotates around the examination region with the patient in it to acquire projection imagery from different directions. The projection imagery is detected by the detector device DD, in this case an x-ray sensitive detector. The detector device DD may rotate opposite the examination region with the x-ray source SS, although such co-rotation is not necessarily required, such as in CT scanners of $4^{th}$ or higher generation. The signal source SS, such an x-ray source (X-ray tube), is activated so that an x-ray beam XB issues forth from a focal spot in the tube during rotation. The beam XB traverses the examination region and the patient tissue therein, and interacts with same to so cause modified radiation to be generated. The modified radiation is detected by the detector device DD as intensities. The detector DD device is coupled to acquisition circuitry such as DAQ to capture the projection imagery in digital for as digital imagery. The same principles apply in (planar) radiography, only that there is no rotation of source SS during imaging. In such a radiographic setting, it is this projection imagery that may then be examined by the radiologist. In the tomographic/rotational setting, the muti-directional projection imagery is processed first by a reconstruction algorithm that transforms projection imagery from projection domain into sectional/volumetric imagery in image domain by assigning image values to s spatial grid network that conceptually makes up image domain, a portion of 3D space in examination region where ROI /patent PAT is situated during. Image domain is located in the examination region. Projection imagery or reconstructed imagery will not be distinguished herein anymore, but will simply be referred to collectively as (input) imagery *V* or input image(s) *V*. It is such input imagery *V* that may be processed refiner system SYS.

The input imagery *V* may however not necessarily result from X-ray imaging. Other imaging modalities, such as emission imaging, as opposed to the previously mentioned transmission imaging modalities, are also envisaged herein such as SPECT or PET, etc.

In addition, magnetic resonance imaging (MRI) is also envisaged herein in some embodiments. In MRI embodiments, the signal source SS is formed by radio frequency coils which may also function as detector device(s) DD, configured to receive, in receive mode, radio frequency response signals emitted by the patient residing in a magnetic field. Such response signals are generated in response to previous RF signals transmitted by the coils in transmit mode. There may dedicated transmit and receive coils however in some embodiments instead of the same coils being used in the said different modes.

In emission imaging, the source SS is within the patient in the form of a previously administered radio tracer which emits radioactive radiation that interacts with patient tissue. This interaction results in gamma signals that are detected by detection device DD, in this case gamma cameras, arranged preferably in an annulus around the examination region where the patient resides during imaging.

Instead of, or in addition to the above mentioned modalities, ultrasound (US) is also envisaged, with signal source and detector device DD being suitable acoustical US transducers.

The imagery V generated by whichever modality IA may be passed through a communication interface CI to (non-volatile) memory MEM, where it may be stored for later review or other processing. However, an online setting is not excluded herein, where the imagery is reviewed as it is produced by the imaging apparatus. Having said that, in many occasions, an offline setting may be sufficient or more apt, where the imagery is first stored in the said memory MEM, preferably in association with the respective patient's ID. The image memory may be non-volatile, such as a medical image data base of the likes of a PACS or similar. Still, the system SYS for segmentation is specifically also envisaged for real-time, on the spot segmentation refinement, as it can be implemented for accelerated processing using parallelization and others. User can request segmentation results and receive same in the exam room on acquisition/reconstruction, off the imager IA, for quasi immediate, real-time application.

Turning now to the segmentation refiner system SYS in more detail, segmentation as understood herein is one of medical segmentation. In this context, segmentation is the operation of automatically conferring clinical or medical meaning to a given medical image acquired of a region of interest of a patient. Briefly, segmentation as mainly envisaged herein is one of semantic labelling or semantic segmentation. A set of semantic labels *{pj}* from a finite set of pre-defined classes are assigned to image elements that make up the image V to be segmented, or more specifically, to be re-segmented as will become apparent below.

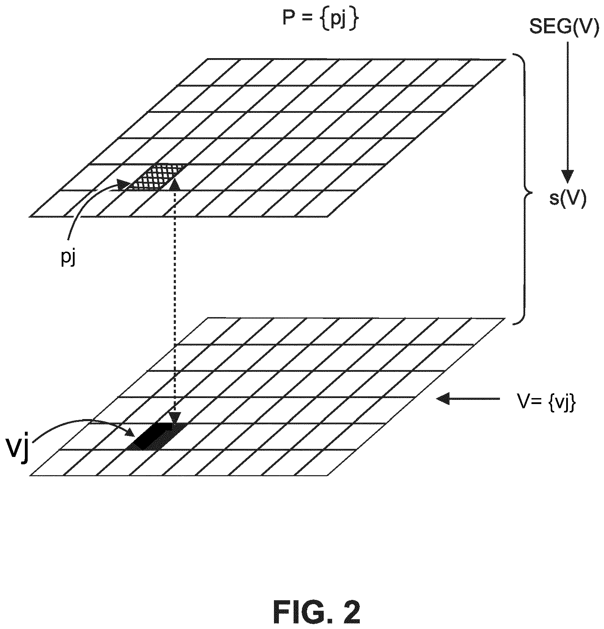

Segmentation operation as such is conceptualized in Fig. 2, to which reference is now made. Fig. 2 illustrates in an explosion drawing the result s=s(V) of segmentation operation by generic segmenter SEG. The segmentation result s can be conceptualized as being made up of the original image V, and a class map P associated with the structural input image V. The input image V that was the subject of prior segmentation by segmentor SEG, a suitably trained or otherwise configured software and/or hardware module, comprises image elements, such as voxels, pixels, or groups thereof, that is chunks, made up of plural such pixels or voxels. The illustrated image is of two dimensions, so has a matrix structure of rows and columns, each entry being such an image element having an image value, such as intensity (value) of an X-ray image, or an HU value of a reconstructed volume etc. An atomic image element is a voxel or pixel, and we will refer herein in the following mainly to such atomic elements for the sake of simplicity. More specially, as most applications envisaged herein are for 3D or 4D (time series of 3D) imaging (CT, MRI, nuclear, etc), we will be referring to voxel(s) vj of image V, again for simplicity. However, such simplifying short-hand language is not to be construed herein as a loss of generality of the principles described herein, as these are readily and immediately applicable to pixels of 2D imaging, or to a more coarse-grained, non-atomic processing per regions (subsets) of such voxels or pixels, or at different resolution levels. Thus, the following will refer to atomic image elements, in particular voxels, with the understanding that the principles described herein can also be described in at lower resolutions, or to groups (regions) of pixels or voxels, and such applications are explicitly envisaged herein in embodiments.

In segmentation result s, each image element, such as voxel vj, is associated with a class label pj. Thus, the class map P, comprising all such spatially associated class labels pj, has the same spatial dimension as the underlying spatio-structural image V.

The class map P may comprise scores (number), for example probabilities, that provide an indication of the likelihood, probability, or of level of believe (in the Bayesian sense) that the associated voxel has the respective label. For example, the class labels pj may be from a set of mutually exclusive classes in which case the scores may be associated with probabilities for a given voxel vj to be representative of the respective class pj. However, in some cases the categories of classes may overlap (such as in tendon-muscle tissue transition, etc), in which case the numerical score may not necessarily be a probability, but in either case, the principles described herein are equally applicable for such cases.

The class labels/classes pj generally refer to different tissue types, such as bone tissue, soft tissue of various kinds, various types of organs, their interfaces, tissues of different organs, etc. Whilst both data items, the structural image V and the class map P, are both spatial data structures of the same dimension, there are conceptual and technical differences, as both are realizations of different data spaces. For example, the image values of image elements of the spatial structural image V correspond to measured quantities, such as radiation intensities detected, decay events, radiofrequency signals, etc. But entries pj of the class map P do not generally represent, in and of themselves, such physical measurement responsive to stimuli, and may not necessarily vary therewith. Rather, they represent a coarse-grained version of such measurements for technical classification purposes. For example, image values in structure image *V* that are representative of the same tissue type may well vary in the structure image, but they will still attract the same semantic or class label pj as recorded in map P. In short, the image and its associated class map P are entities of different data spaces. The segmentation result as provided by semantic segmenter SEG is thus a double data structure s(V)=(P,V). The segmentation result s however may not always be provided in this double structure. Sometimes, only class map P may be so provided on its own, with or without reference to the underlying image V from which it was derived.

An entry pj of the class map P may refer to the associated (as assigned by the segmentation) class label itself, suitably numerically coded to allow for processing herein. Alternatively, or in addition, but in either case preferably, such entry pj may refer to the associated score value, such as a probability, or a respective, per-voxel, probability distribution, discrete or continuous, over some or all class labels per voxel. The actual class label for the voxel is then in generally the class label that attracted the highest probability, or where most of the probability mass is concentrated. For present purposes, because processing of probabilities or probability distributions as a whole is preferred herein, a reference below to class "label" pj, should be construed herein as a reference to the probability/score of the label, or the probability distribution that is associated with the voxel vj/label, or the function that gave rise to the score. In general it will be assumed herein that the probabilistic view is applicable. Thus, entries of class map P are to be construed herein as probability values in the unit interval [0,1], or a probability distribution of the given voxel vj, unless stated otherwise. Still, processing of labels as such, and/or of scores, is not excluded herein, for example based on some discrete mathematical techniques, or when considering instances of continuous labelling, etc. In

What is proposed herein, and referring back to Fig. 1, is a segmentation refiner RF. More specifically, the earlier segmentation module or segmenter SEG provides a segmentation result s(V), including the elements (P, V) as described above in Fig. 2. The refiner RF takes this prior segmentation result s(V) as input, and produces a refined segmentation result s'(V), which can then be viewed, instead of, or alongside with, the original segmentation s(V). The refined segmentation result s'(V) can be stored, visualized, or otherwise processed as required, in order to inform clinical tasks, inform tasks of diagnosis or therapy, or many other tasks, as required, such as planning. As another example application, the refined segmentation result s'(V) may be used to control all types of medical equipment ME through a suitable control interface CI. For example, the refined segmentation result may be used to control operation of a surgical robot, or of a radiation therapy delivery apparatus (such as a linac), or to control radiation planning equipment. The refined segmentation result may be used to control triggering an image acquisition when monitoring for arrival of a contrast agent accumulation ("bolus"), etc.

It has been found that some segmentors, such as the generic segmentation module SEG, are in general prepared and configured with specific clinical objectives in mind. These objectives may not necessarily fit the current objective. For example, a different target patient population may have been used to train the model in an ML setting, or such configuration was done for a different clinical goal, different from the one a clinical user wishes to purse currently.

In such a situation, rather than re-designing a new segmentation module for a new clinical task or purpose from scratch, such as re-training a model on a newly acquired training data set in a machine learning set-up, it is proposed herein instead to use a refiner RF that uses the given image V as a guidance to refine the original segmentation map P by taking peculiarities of the currently given input image V into consideration. This allows avoiding otherwise costly, time-consuming, CPU-heavy, and cumbersome exercises such as procuring and marshalling new training data set, pruning and preparing same ("data cleansing"), labelling same, and rerunning the training computation, etc.

Thus, operation of the refiner RF may be understood as one of re-distribution of the original class labels pj (as per the current class map P) of the original segmentation s(V). And this redistribution is based on the specific characteristics as embodied by the image information as captured in the instant input image V. Especially for machine learning, massive re-learning exercises can be avoided with the proposed refiner RF. The refiner RF also attracts some computational effort, however this effort in general pales in comparison to the magnitude of efforts required in re-training a new model from scratch for a given task at hand, based on new training data, considering in the ML-costs mentioned above in terms of training data procuring/cleansing, new labelling, augmentation, aggregations, etc.

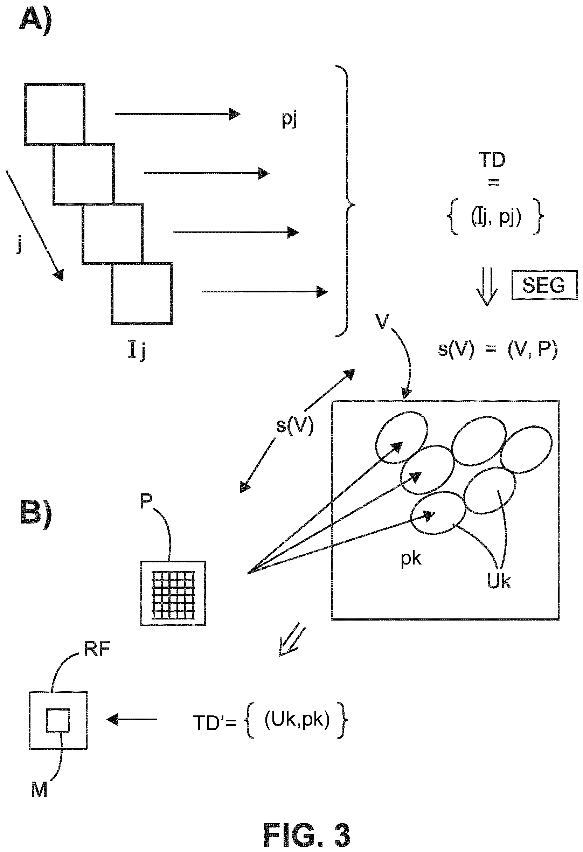

Fig. 3 illustrates basic principles underlying operation of the newly proposed segmentation refiner RF. Specifically, an operational principle of refiner RF is illustrated in Fig. 3B, whilst Fig. 3A illustrates, in contrast, a conventional learning set-up, in particular, for semantic segmenters SEG of the machine learning ("ML") type. In such ML powered segmenters, machine learning is used to train an ML model (such as a neural network, SVM, etc), based on training labelled/annotated training TD to so configure segmentor SEG.

Ordinarily, as sketched in Fig. 3A, training is based on training data TD, a collection of images, that is, on a set of images. This is illustrated as image Ij instances or realizations. This set TD of images Ij, which can run easily be in 100s or 1000s strong or even beyond, are usually labelled by labels pj in a supervised training setup. Semantic ground-truth labels pj are assigned to each training image Ij, either globally or locally per voxel/pixel, or regions thereof, as required. This may be done in a costly effort, for example by human experts reviewing large volumes training imagery Ij. Thus, clinically experienced users may review existing stock of training imagery as may found in medical databases and would use, for example, an annotation tool to assign labels to voxels, to so indicate specific groups of tissues, diseases type, organ type, etc, whatever the task at hand. The so labelled training data set $TD = \{(Ij, pj)^j\}$ is then passed into a training system that implements, on one or more computing devices, a machine learning algorithm to train the model on the labelled training data, to so build the segmenter SEG. Once trained, the underlying model of segmentor SEG can then be applied to a new, given image to produce as explained earlier the segmentation result s(V).

In distinction to this paradigm of training as shown in Fig. 3A, what is proposed herein instead is to use as training data input a different, new type, of data. This new type of training data TD' is defined in different data spaces, as compared to the data space in which the realizations of standard training data pairs (Ij, pj) of set TD reside (see Fig 3A, B above). Yet more specifically, what is proposed herein for the refiner RF to use is a selection of images, or possibly even a single image V, and partition same into sub-sets or neighborhoods Uk that may or may not overlap. The neighborhood subsets Uk may tile or partition the whole, or part of the image V. The neighborhood subsets may be small, such as a cube (or circle in 2D), ellipsoid (ellipse in 2D), ball (circle in 2D), or of any shape, just a few voxels across. By covering/tiling only parts of an image at a ROI for example, or by defining small-sized Uk's, CPU time and memory resource may be used more efficiently. The class map P as included in the given segmentation s(V) of V is then used to assign corresponding labels or scores pk, taken from class map P, to some or each such sub-set Uk as a whole. This can be done for example by computing an average of all the voxels labels that are part of a given neighborhood UK, or to use the label that has the maximum score, probability, or combine the probabilities otherwise, etc. The labels pk' assigned to the subsets Uk, may differ from the original labels pk, such as when averaging is applied. The probability mass as per the original labels pk may be re-distributed as a result of this assigning operation. For simplicity of notion, the new labels (probabilities) of the subsets Uk will be again denoted herein as "pk".

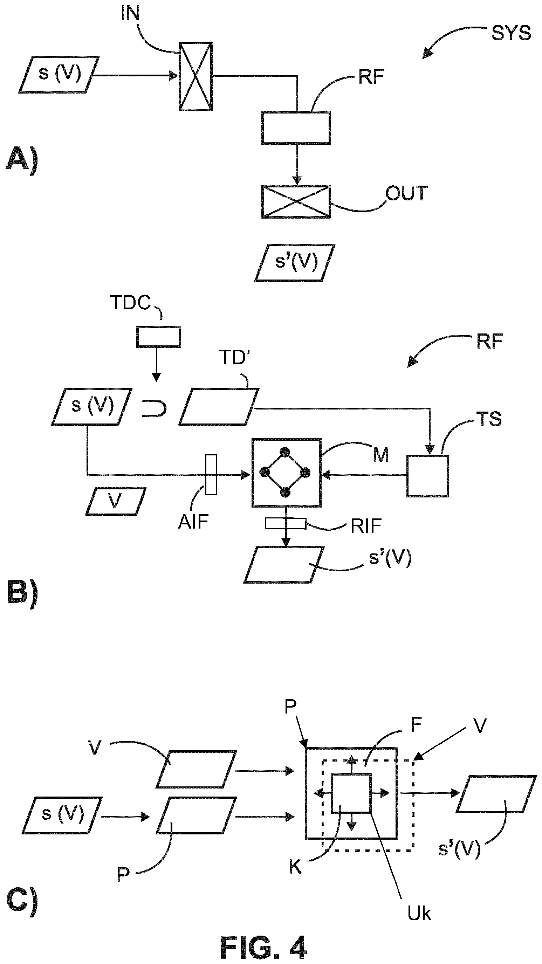

The new training data set TD' that is used by refiner RF is thus pairs of data items (Uk, pK), that is, individual neighborhoods drawn from a few or even a single image V, each assigned to the respective class label pk. The new label pk is a function of the labels of the voxels vj comprised in the respective sub-set Uk. This new training data set TD' has a much simpler structure than the original set TD. It can be readily obtained by a training data (re-)constructor TDC (see Figure 4A below), which may apply a partitioning operation of the given input image V to derive the neighborhoods Uk. The partitioning operation may be randomized, or pre-determined. The training data constructor TDC may then collect, for some, but preferably each, such neighborhood, the respective label according to a label collection policy. Such label collection policy may include maximization for scores/probabilities, or score/probability averaging, etc, as earlier mentioned. The neighborhoods Uk do not necessarily have a "hard" border. Soft border implementations, such a softly-weighted and gradually transitioning fringe portions (e.g. via Gaussian weighting), are envisaged herein.

Simpler than the original training data TD this training data TD' may be, but it better captures individual traits of the given image V by harnessing the information that resides in the collection of subsets of that input image. This newly formed training data set is then used instead of the previous, more complex, set-of -images training data set TD. The newly fashioned training data set TD' is now a set-of-neighborhoods-of-given-image. Preferably a single image V is used to define the new training data set TD' as this allows for highly individualized segmentation refining, tailored to that one single image V. However, this can be relaxed and a small collection may together use to derive the training data TD', thus leading to refiner considering the appearance of the collection as a whole.

Very little computational effort is needed for an model to be re-trained, based on this new simplified training data set TD'. Such training can be executed faster, with less computational effort as compared to a training effort based on the high dimensional space of original set-of-images training data TD (as illustrated in Figure 3A) that comprises a series of different images, each with their own labels. Thus, what is proposed herein in some embodiments (but not in all), is to use the modified training data set TD' instead of a data set of the kind of the original set TD. The newly constructed training data set TD' resides in a different data space than the original set-of-images training data TD. The newly constructed training data TD' set comprises instead, sub-sets of a few given images, or even of the single image V, and its related labels. It is proposed herein to use this newly constructed training data set to newly train a machine learning model. Once this model is so trained, it may then be applied to the very input image V from which new training data set TD' was constructed, to obtain the modified, that is, refined segmentation result s'(V). This result s'(V) includes a new class map P' which is in in general a re-distributed version of the original map P as per the earlier given segmentation s(V).

Whilst the refiner RF may work well based on a single image V, and this is indeed preferred for efficiency and simplicity, the principle may be equally applicable to a small set of plural such input images $V_{1-N}$, if required. What is more, even with a single image V, the above-mentioned re-training based on new training data set TD' may be iteratively applied using the newly obtained refined segmentation s'(V). The iterations are by starting over the above, that is, by re-partitioning V again into new neighborhoods $U_k^{i+1}$, but this time using the redistributed map P', and so on, in one or more cycles, as required. It is to be expected that some form of convergence will set in. The repeated partitions may be the same or may be different. Using different partitions in each cycle may be advantageous.

The ML model type or architecture that is being retrained over the new training set TD's in one or more iterations may be the same as the model used by extant segmentor SEG that provided the input segmentation result s(V). Alternatively, a new model type or architecture is used in the retraining over TD' in single or multiple iteration. Each or some iteration may use a different ML model type or architecture.

Reference is now made to the block diagram of Fig. 4A which illustrates operation of image processing system SYS, including refiner RF, based on the principles described above in Figs. 2,3. Fig. 4A shows the general set-up, whilst Figures 4B and C illustrate schematically different embodiments of Fig. 4A.

A given segmentation result s(V), whichever way obtained, manually, automatically, by ML, analytically via model-based-segmentations (MBS), or other, is received at an input interface IN. Thus, the extant segmentor SEG may be automated, based on ML or MBS or other, or may be a manual tool, such an annotation tool operable by user for example. Thus, the extant segmentor SEG is to be construed broadly as any means that provides such an initial (medical) segmentation result s(V).

Segmentation result s(V) = (V,P) is then processed by refiner RF, to produce a refined segmentation result s'(V) for the same input image V. The input image V can be of any type, or of any dimension as described, so could be a radiograph, a CT, an MRI image, nuclear image or any other. Operation of the refiner RF may also take derived features, such as transforms (eg, Distance transforms) or other pre-processed data, etc., into account, in addition to the image values as recorded in the input image V and in addition to the labels in map P.

Fig. 4B is a schematic representation of an embodiment of refiner RD that is based on machine learning. In such embodiments, a given model M is trained by a training system TS, based on the described newly fashioned training data set TD' and as explained above in Fig. 3B. Training data constructor TDC is operable to construct the new training data set TD' using partitioning (with or without overlaps) into subsets Uk c V, and to reassign labels pk per subset, based on P, as explained above at Fig 3B. The sub-sets (neighborhoods) Uk of the input image V, and their newly assigned class labels based on the old class map P, {(Uk, pk)}, are input as training data TD' into ML training systems TS to train a model M based on data TD'. Once training is completed, the so trained model M is then made available and can then be applied to the input image V , to yield the refined segmentation result $M_{TD'}(V)$= s'(V). Thus, the newly trained model M, trained on newly constructed training data TD' forms a new segmenter SEG', which may then be applied to the same input image V, to produce a different, the refined, individualized segmentation result s'(V). As explained this segmentation result will amount in general to an at least partial/local re-distribution of the class labels pk (the probability mass), which takes into account the peculiar characteristics of the particular image V, and may produce in many cases a more appropriate segmentation which can be better used for the intended clinical task. In particular, borders, or delineations between image regions may be redrawn as compared to the old segmentation s(V), thus providing new clinical insight. Training data constructor TDC partitions into subsets Uk c V, and re-labels subsets Uk based on class map P as described earlier, in order to so fashion the new training data set TD' for training by system TS.

As the model is M trained on various subsets Uk of V, which have therefore a smaller size than the whole set V, the refiner RF may include an adaptor interface (AIF) that is operable to allow the trained model to accept the whole image V as input when computing post-training the refined segmentation. The adaptor interface AIF may replicate the partition method used by training data constructor TDC, to so feed in, in sequence or preferably in parallel, the volume V as subsets into the model M. Thus, the volume image V / map P is processed by model in plural channels, each channel corresponding to input taken from image V or map P from a given subset. The per subset input from V may be independently processed by the model M. A data re-assembler output interface RIF combines then the individual channel outputs of model M to obtain the refined segmentation result s'(V) having the same size as the original segmentation s(V). For example, in ANN (artificial neural network) type models, the adaptor interface (AIF) may be integrated in, or arranged upstream of ANN's input layer, whilst the data re-assembler output interface RIF may be integrated in or arranged downstream the ANN's output layer.

A different embodiment, more classically analytically configured, is shown in Fig. 4C which is based on classical image filtering, such as a bi-linear filter or any other filter that is noise reducing and, preferably, also structure preserving. Such classical analytical model may or may not use ML. However, such classical analytical models in general use specific modelling, based on assumptions and physical insight, as opposed to ML, or pure ML, approaches, that allow a "freer", less restricted, more generic modelling approach. Many such ML approaches use backpropagation in learning, whilst this is not usually the case in analytical modelling, although such combination is not excluded herein. Typical analytical approaches may have only few meaningful open parameters to adjust for, whereas typical ML models (such as back-propagation neural networks and others) have generally a much larger number of parameters that are being trained for. However, there may well be embodiments that use hybrid modelling that use both, ML and more classical, analytical approaches, informed by clinical, medical, anatomical, physiological, or other domain knowledge.

Turning now in yet more detail to the analytical filter-based embodiment of refiner RF as per Figure 4C, a dual or co-processing ("cross-filtering") is proposed there where, again, based on the concept of sub-sets of the given single image V and the original segmentation result s(V), the refined segmentation result s'(V) is obtained. Again, the original input segmentation s(V) may be provided whichever way. As above for Figure 4A, B, this input segmentation result s(V) may be received in an online setting, shortly after imaging, or may be retrieved for later review, from some medical database from a prior exam for example, possibly done some time ago.

In the filter-based embodiment Fig 4C, the input image V and the class map P are co-filtered by a given filter F using a kernel K. In this embodiment, the subsets Uk are now defined by the kernel width as the subset of image values in V that are processed for any given output of filter F, with different subsets being defined as kernel F slides over the input image V. More specifically, filter F is run over the structural image V to produce a filtered image. The filter is based on weights, which are generally updated as the filter slides over input V, but embodiments where a pre-defined set of filters is used is not as such excluded herein. In addition, and concurrently or later, filter weights used by kernel F when processing image V are co-used to filter the map P as it was an image. This can be done as shown Fig. 2, as map P has the same spatial dimension (matrix or tensor, depending on dimension of data V) as input image V (2D, 3D or 4D). Thus, refiner RF co-filters class map P with image V using the same set of weights applied on both data channels, V,P. In the filters F proposed herein, the kernel weights are dynamically adapted based on image information, as the kernel is slid over the image V. The result of the image filtering V as such is of lesser or no interest herein, and could be discarded, or may still be used for some purposes, such as for statistical purposes, or for viewing, quality check, etc. What is is of interest herein is the co-/cross-filtered map P', whose filtering is informed by structures in the input image V. The filtering on P operates on its labels pk, that is on probabilities or on their probability distributions, or on family parameters thereof, as required and as explained above. If operation on class labels as such is intended, which is not preferred herein, they should be encoded in some numerical form such as on a scale of numbers etc, to better define the processing.

The co-filtered class map P' may then be, optionally together with image V (if needed), be provided as the refined segmentation result s'(V). Preferably, the new map P is applied to the input image V, to relabel the voxels as per the new class probabilities that are new encoded in refined map P' to obtain refined segmentation result s'(V.

Thus, in this filtering embodiment, structures from the original image (eg, edges, transitions, etc) are propagated into a different space, represented by the class map P being a realization of an instance of this class map space. The re-distribution of the class labels in the class map P to derive P' (and hence s'(V)), is thus informed by edges or other image structures in the original image V. The channel that represents the class map being filtered, can then be output as the refined segmentation result, preferably with P' applied to input image for relabeling of voxels. This embodiment too has been observed to yield, at times, more appropriate segmentation that takes the particular characteristics of the given input image better into account than, for example, an ML segmenter that was configured for other purposes initially. For example, such an ML segmentor SEG may have been trained on a (large) corpus of training imagery, with was perhaps marshalled with different clinical objective in mind, different to the clinical objective that user wishes to pursue in relation to the current image V.

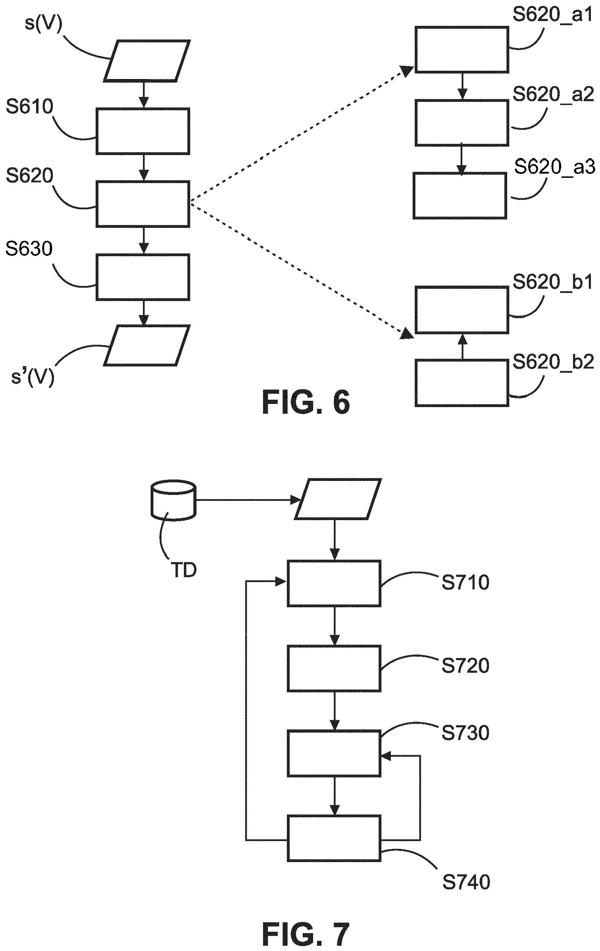

Embodiment of the filter-based embodiment of Fig. 4C, with various filter types or kernels K are envisaged herein. Some such will be described in more detail below at Figure 6 step S620, S610_b1.

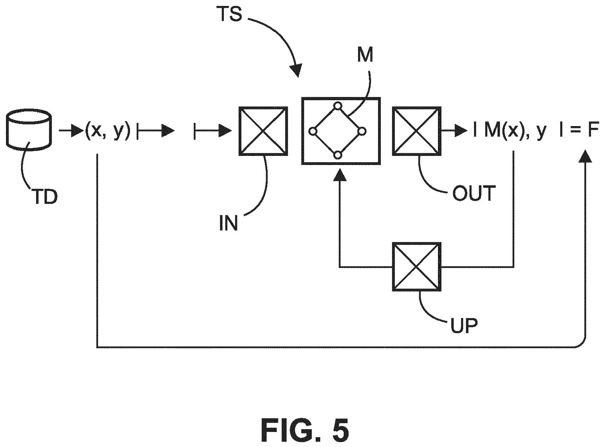

Reference is now made to Fig. 5 which shows training system TS in more detail, and as may be used by refiner RF in the machine learning based embodiment as explained above with reference to Figures 3B, 4B. In Fig 5, $(x,y)$ relates to the training data set TD' in a supervised setup, "x" is a generic reference to a given sub-set neighborhood Uk, whilst "$y$" is the associated "ground truth label" pk, which is derived from the original class map P by maximization, averaging or by any other combination or policy by training data set constructor TDC. Thus, in preferred embodiments, y relates to the probabilities or probability distributions (or their family parameters), as constructed from P for the respective neighborhoods UK. Lower case "$x=UK$", "$y=pk$" letters will be used herein to generically refer to instances of this new training data set TD'.

Various models ML models M are envisaged herein that may be trained by system TS, including neural network ("NN"), in particular of the convolutional type that have been found to yield good results when processing spatial data such as is the case here for image V and its class map P. As earlier mentioned, if the extant segmentor SEG was based on a machine learning model M', the type/architecture of the model M of interest now, which is trained by system TS on new the training data TD', may or may not have the same type/architecture as M'. Both options are possible and have been found to yield good results.

In general, two processing phases may thus be defined in relation to the machine learning models: a training phase and a later deployment (or inference) phase.

In training phase, prior to deployment phase, the model is trained by adapting its parameters based on the training data. Once trained, the model may be used in deployment phase to compute the alternative findings, if any. The training may be a one-off operation, or may be repeated once new training data become available.

In the training phase, an architecture of a machine learning model M such as an ANN network or other is pre-populated with initial set of parameters. The parameters $\theta$ of the model M represent a parameterization $M^\theta$, and it is the object of the training system TS to optimize and hence adapt the parameters $\theta$ based on the training data ($x=Uk$, $y=pk$) pairs. In other words, the learning can be formulized mathematically as an optimization scheme where a cost function F is minimized although the dual formulation of maximizing a utility function may be used instead.

Training is the process of adapting parameters of the model based on the training data. An explicit model is not necessarily required as in some examples it is the training data itself that constitutes the mode, such as in clustering techniques or k-nearest neighbors. etc. In explicit modelling, such as in NN-based approaches and many others, the model may include as system of model functions/computational nodes, with their input and/or output it least partially interconnected. The model functions or nodes are associated with parameters $\theta$ which are adapted in training.

The parameter adaptation may be implemented by a numerical optimization procedure. The optimization may be iterative. An objective function $F$ may be used to guide or control the optimization procedure. The parameters are adapted or updated so that the objective function is improved. The input training data $x=Uk$ is applied to the model. The model responds to produce training data output M(x), an estimate for the associated pk. The objective function is mapping from parameters space into a set of numbers. The objective function F measures a combined deviation between the training data outputs M(x) and the respective targets y. Parameters are iteratively adjusted to that the combined deviation decreases until a user or designer pre-set stopping condition is satisfied. The objective function may use a distance measure | . | to quantify the deviation.

In some embodiments, but not all, the combined deviation may be implemented as a sum over some or all residues based on the training data instances/pairs or batches (sets) of $(x,y)^i$, and the optimization problem in terms of the objective function may be formulated as:

$$argmin_\theta F = \sum_k || M^\theta(x_k), y_k|| \qquad (1)$$

In the setup (1), the optimization is formulated as a minimization of a cost function F, but is not limiting herein, as the dual formulation of maximizing a utility function may be used instead. Summation is over training data instances i.

The cost function F may be pixel/voxel-based, such as the L1 - or the smoothed L1-norm, L2-norm, Hubert, or the Soft Margin cost function. For example in least squares or similar approaches, the (squared) Euclidean-distance-type cost function in (1) may be used for the above mentioned regression task for regression into output finding(s).

If refiner RF operates on probabilities /probability distributions, as is indeed envisaged herein in preferred embodiments, the ML model M is preferably configured as a regression model, as the subset of V are now regressed into a continues probability value or into a function (the local probability distribution at a voxel vj location). The local probability distribution functions may be parameterized by their mean and/or variance, standard deviation, other moments, or other family parameters, such as for Gaussians, etc, in which case the model M regress for such probability distribution parameters.

When configuring the model as a classifier that classifies into findings, the summation in (1) is formulated instead as one of cross-entropy or Negative Log Likelihood (NLL) divergence or similar. Operation as a regressor is preferred herein.

The exact functional composition of the updater UP depends on the optimization procedure implemented. For example, an optimization scheme such as backward/forward propagation or other gradient based methods may then be used to adapt the parameters $\theta$ of the model M so as to decrease the combined residue for all or a subset $(x,y)$ of training pairs from the full training data set. Such subsets are sometime referred to as batches, and the optimization may proceed batchwise until all of the training data set is exhausted, or until a predefined number of training data instances have been processed.

Training may be a one-off operation, or may be repeated once new training data become available.

Reference is now made to the flow chart of Figure 6 which implements the above-described refinement system SYS, including refiner RF, with the understanding that the steps described herein are not necessarily tied to the architectures and system described above, but may be understood as a teaching in their own right.

The initial semantic segmentation result s(V) (i.e., meshes or labeled volumes) may have been obtained from Model-Based-Segmentation (MBS), or a Machine Learning (ML) model inference, or indeed manually, by annotation/delineation as applied by a clinician.

At step S610 such prior, extant, segmentation result s(V) is received from a prior segmentation module. The segmentation result includes class map P for input image V. Segmentation result may include, or may refer to, or may be otherwise associated with the underlying image V that was segmented and gave rise to map P.

At step S620 the segmentation result is refined by processing, in particular, the initial segmentation s(V). Such refinement is based class map P, in conjunction with the structural image V. More particularly, the refinement purposes is based on (true) sub-sets in which the original input image V is partitioned and processed together with the initial class map P,as envisaged herein in various embodiments.

The result of this refined operation at S620 is in general a re-distribution of class labels in respect of the image, thus producing the new, refined, classification result s'(V) that is then output at step S630 for storing, displaying, processing, control purpose (such as of medical equipment ME mentioned above), planning, etc.

For example, the refined labeling s'(V) can be used for automated in-image measurements of dimensions, of volumetric burdens (calcification, perfusion), surgical path planning (TAVI, needle biopsies), etc.

In one embodiment, machine learning is used in which case segmentation result refining step S620 may comprise the following sub-steps:

at S620_a1, a newly constructed training data set is derived from sub-sets into which the input image V of the input segmentation s(V) is partitioned into. The deriving of the new training data further includes assigning a respective class label, based on the existing class map P of the original segmentation, to some or each such image sub-sets (also referred to herein as neighborhoods Uk).

at S620_a2, a machine learning model is trained on the newly constructed data training set as per S620_a1. An ML-training algorithm is used, which may depend on the type of architecture of the model to be trained. Any ML model, such as of the regression or classifier type, may be used, such as NNs, CNNs, SVMs, k-means, autoencoders, etc. The training algorithm may be iterative. The training algorithm may include a training error backpropagation loop. Preferably, as probabilities/probabilities distributions of the labels as per map P are processed herein as included in the new training data set TD', regression type model is preferred, but classifier models are not excluded.

At step S620_a3, when training at step S620_a2 is completed, as may be determined from a stopping condition, the so trained model M is applied to the original image V to yield the refined segmentation result s'(V). The earlier mentioned adapter AIF and reassembling interfacing RIF may be used when applying the Uk-trained model M to the whole image V as input, to account for the size mismatch.

If the initial segmentation was provided by initial segmentor based on a model, the newly trained model M may differ (in type or architecture) from this earlier model.

In some embodiments of the ML-based refiner step S620, this may be based on on the k-means algorithm. k-means and similar clustering techniques may be considered a process of iteratively optimizing the class descriptor ("mean"). k-means and its cognates compute centroids ('means') in feature space. Using the initial classification/segmentation P, a classification is retrained. Class centers may be determined as weighted means (or any kind of average value). The training may be based on using a linear distance metric, preferably for each voxel individually, on local neighborhoods Uk, with Gaussian weighting centered and preferably tapering off around each voxel. This may be followed by a re-classification of each voxel to the nearest class center. This may be iterated over in one or more cycles, as required. The refined segmentation s'(V) is then defined by the re-distributed class centers. Specifically, the refined segmentation s'(V) is the final labeling done based on the re-distributed (refined) class centers.

In another embodiment of an ML-based implementation of refiner step S620, a regression engine on voxel-wise feature vectors or patches may be used. In such a setup, some or each class probability of a voxel is trained and predicted as a regression value, e.g. by decision tree algorithms such Random Forest (RF), Light Gradient Boosting (LGM) [4], or support vector machines (SVM). Each of these techniques is fast enough to allow training and inference on-the-fly on the one incoming image volume or slice V, with its initial classification P.

In yet other embodiments of ML-based implementation of refiner step S620, variational auto-encoding (VAE) is used, based for example on an artificial neural network, or other. The model in this VAE setup is preferably trained on-the-fly on the single incoming image volume V with its initial classification P, to reproduce the voxel-wise probability of each class from a local image patch Uk. This is followed by an inference to determine the refined voxel-wise class reassignment, to so obtain refined segmentation s'(V). "On the fly" as used above relates to the concept of performing the training in response to the segmentation refinement request. As the proposed method and system can work on a few or even a single image V, and by taking advantage of certain computational acceleration measures (parallelized processing of neighborhoods/patches Uk, etc), training can be done quickly enough to implement such on the fly training. Such on-fly-arrangement may also be used in other filter or ML-based embodiments, and is not confined to k-means.

In another embodiment, step S620 is based on an image filter F, such as a bi-lateral filter, or other structure preserving noise filter.

At step S620_b1, the filter is used for cross-filtering of initial image V and map P, the latter treated as an image. Thus, a 2-channel processing is used with information crossover from image channel V to map P channel, such that structure in V steers or otherwise influences co-filtering of map P.

For example, in step S620_b1, the one or more filter F is applied to the original image V and at the same time is applied, with the same filter weights as derived and used for image V, to the class map P treated as an image, that is, as a spatial data structure as it is. Thus, the two data items, the input image V and the class map P, are essentially co-filtered with the same filter weights or kernel filter weights.

At step S620_b2, the result of this filtering of the class map P is then provided as output and represents the refined segmentation result s'(V) in this filter-based embodiment. In a final step, the class labeling for each voxel/pixel is determined from the maximum class probability or score, as required to finalize relabeling based the new filtered map P'. Selection of maximum probability may not always be needed. For example, a candidate set may be set up, from all labels that attract a higher probability than a pre-defined or (user-)adjustable threshold. A random choice may then be made from among such candidate set. Other choice policies than random may be considered instead, as required and called for by the case at hand.

Referring now in more detail to refining step S620 in this filter-based embodiment, this step S620 may be steered by structure-preserving noise filtering (e.g., using a bilateral filter) by a local kernel. Thus, the initial voxel-wise, discrete, or continuous class probabilities (for some or each class) as per map P may be propagated with the same neighborhood weighting terms as derived from the appearance image V. The weighting terms are in general dynamically adapted from voxel to voxel, and this updating feeds through to the co-filtering of map P. Image V may comprise brightness values, intensities, or additional derived feature values. Noise smoothing and class refinement is done at the same time, optionally iterated over several cycles. In yet more detail and in some embodiments, noise in the appearance image V may be smoothed by a weighted average over a local neighborhood (e.g., Gaussian kernel), where the weights are depending in bi-lateral fashion on both spatial as well as feature distance, resulting in a noise reduction while preserving structure (e.g., edges). Simultaneously, the same weights are used to collect class probabilities in map P for neighboring voxels, for each class respectively. In this way the appearance [or multi-dimensional feature-] image is guiding (by local similarity in appearance) the re-distribution of the class probabilities or scores.

It may be appreciated herein that the above-described filter-based and ML based embodiments, in particular the bilinear filtering and k-means/k-nearest neighbor embodiment, admit to responsive implementation for N dimensions and fast runtimes, in particular when using recent, accelerated algorithms, based on the fast discrete cosine transform or other transforms. See again the paper by *Guang Deng,* cited above. In addition or instead of such transforming, ("*massively*")-parallel implementations are envisaged herein, where processing is parallelized for some or all classes in map P, and/or, some or all voxels in V. GPUs may be used herein for any of the above described embodiments, or other CPU architectures with multi-core design, or similar, in particular for parallel processing. This allows for quick turnround time when user requests the refined segmentation s'(V), of benefit in busy clinical settings, such as in radiological review centers, or in trauma settings, etc. On-the-fly learning may be done with such parallelization.

It may be beneficial, that some or all required neighborhood Uk image processing operations can be mapped on standard Gaussian convolution operations, for which infinite impulse response (IIR) algorithms are known, which are time-constant regardless of kernel size. This allows for a responsive implementation of the filtering operations. See for example, Guang Deng, "Fast compressive bilateral filter", Electronics Letters 53, 2017. Interestingly, this observation is indeed applicable to both techniques: bilateral filtering, as well as k-means, because both techniques are computed in the local neighborhoods Uk, as can be realized by Gaussian filters.

Reference is now made to Figure 7 which shows more details of the training step S620A1.

The training data (x= Uk, y=pk) is a described above.

At step S710 training data is received in the form of pairs $(x_k, y_k)$. Each pair includes the training input $x_k$ and the associated target $y_k$.

At step S720, preferably plural instances (a set, referred to as "batch") of training input $x_k$ is applied to an initialized machine learning model M to produce a training output M(x).

A deviation, or residue, of the training output $M(x_k)$ from the associated target $y_k$ is quantified at S730 by a cost function F. One or more parameters of the model are adapted at step S740 in one or more iterations in an inner loop to improve the cost function. For instance, the model parameters are adapted to decrease residues as measured by the cost function. The parameters include in particular weights of the convolutional operators, in case a convolutional model M is used.

The training method then returns in an outer loop to step S710 where the next batch of pairs of training data is fed in. In step S720, the parameters of the model are adapted so that the aggregated residues of all pairs considered are decreased, in particular minimized. The cost function quantifies the aggregated residues. Forward- backward propagation or similar gradient-based techniques may be used in the inner loop.

Looping over training pair instants I, instead of over batches (sets) thereof is possible, but batchwise processing is preferred as it can be parallelized for faster learning, and tends to yield better training results.

Examples for gradient-based optimizations may include gradient descent, stochastic gradient. conjugate gradients, Maximum likelihood methods, EM-maximization, Gauss-Newton, and others. Approaches other than gradient-based ones are also envisaged, such as Nelder-Mead, Bayesian optimization, simulated annealing, genetic algorithms, Monte-Carlo methods, and others still.

More generally, the parameters of the model Mare adjusted to improve objective function F which is either a cost function or a utility function. In embodiments, the cost function is configured to the measure the aggregated residues. In embodiments the aggregation of residues is implemented by summation over all or some residues for all pairs considered. In particular, in preferred embodiments the outer summation proceeds in the said batches (subset of training instances), whose summed residues are considered all at once when adjusting the parameters in the inner loop. The outer loop then proceeding to the next batch and so forth, until the requisite number of training data instances have been processed. The summation over index "k" in eq (1) above may thus extend batchwise over the whole respective batch.

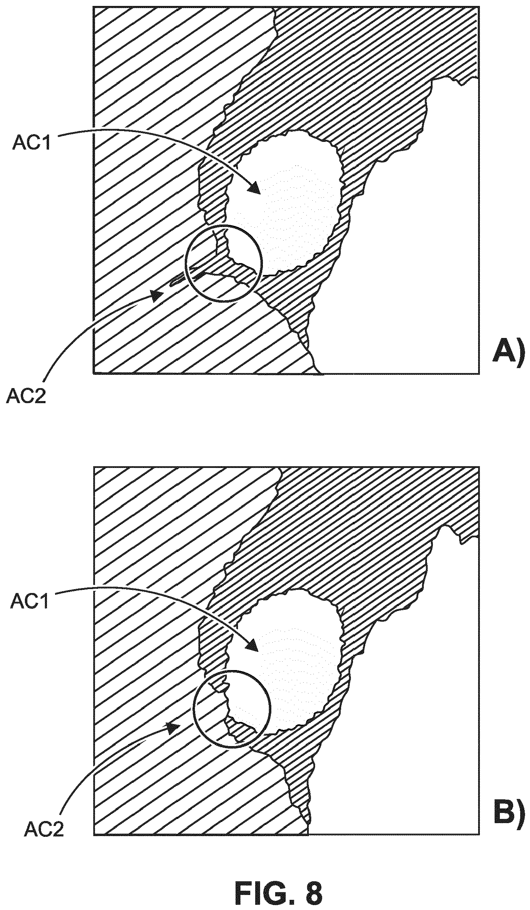

Fig. 8 is an illustration of the refined segmentation results achievable with the proposed method (Fig. 6), and system SYS, RF.

Fig. 8A represent a segmentation result into different anatomic components AC1, AC2. The example is based on a cardiac CT volume, processed or rendered as a slice in transverse plane. What is shown is aorta tissue AC1 segmented against the membranous cardiac septum AC2. The circle shows that a small incision is segmented for in the septum region AC2, which can be explained by a bias in the training data set that may have been used for the extant segmenter SEG that produced the segmentation of Figure 1A. The training data set used there, may have included a patient population where such incision was prevalent. This may be due to a good proportion of patient in this training data set had undergone cardiac valve surgery, which is known to cause such incision. However, when such a segmenter is applied to a given image from a patient that did not have a cardiac valve repair, this kind of bias towards incisions, may not yield the best results.

Indeed, as Fig. 8B testifies, when the proposed refined segmentation is applied to the same image, then the incision is no longer segmented for as shown in the circle portion Fig 8B. Instead, there is now a clear interface emerging between the aorta AC1, and the membranous septum AC, as may be expected for patients that have not seen a cardiac valve implanted.

Thus, it can be appreciated, that with the proposed method and system, segmentation results fashioned for a certain population or purpose, can be re-used, indeed repurposed, for other clinical tasks, in return for a modest computational effort as enabled by the refiner RF, SYS. Thus, the proposed method and system opens up opportunities to harness the vast trove of existing segmentation models and results for a given, new task, despite that such models were actually previously trained, sometimes at great expense, for different tasks. Earlier segmentation results can be re-used and fine-tuned, that is, refined, for new medical tasks not envisaged when those prior generation segmenters where trained. This allows saving computational efforts, and the associated energy that would otherwise be required to power large scale computations and memory management for retraining of the models on another, newly procured, corpus of training data.

The components of refiner system SYS may be implemented as one or more software modules, run on one or more general-purpose processing units PU such as a workstation associated with the imager IA, or on a server computer associated with a group of imagers.

Alternatively, some or all components of system SYS may be arranged in hardware such as a suitably programmed microcontroller or microprocessor, such an FPGA (field-programmable-gate-array) or as a hardwired IC chip, an application specific integrated circuitry (ASIC), integrated into the imaging system IAR. In a further embodiment still, the system SYS may be implemented in both, partly in software and partly in hardware.

The different components of system SYS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

## Claims

1. System (SYS) for refining an image segmentation result, comprising:

    an input interface (IN) for receiving a prior segmentation result segmented by an initial segmentor (SEG), the result including an input structural image, and an input class map associated with the structural image, the input class map assigning image elements of the input structural image to classes;
    refiner (RF) configured to refine the input class map, based on subsets of the input structural image, into a refined class map for the input structural image to so obtain the refined segmentation result; and
    output (OUT) for providing the refined segmentation result.

2. System of claim 1, wherein the refiner includes a training system (TS) configured to train a machine learning model (M) as a new segmentor (SEG') based on training data including i) the subsets and ii) the input class map.

3. System of claim 2, wherein the machine learning model (M) of the refiner (RF) is any one of: i) a classifier, ii) regressor, iii) clusterer.

4. System of any one of claims 2 or 3, wherein the refiner (RF) is to apply the new segmentor (SEG') to the input structural image to obtain the refined segmentation result having the refined class map.

5. System of any one of the previous claims, wherein the refiner (RF) is to apply an image filter (F) to the structural input image using filter weights in neighborhoods as per the subsets, and the refiner (RF) further to co-filter, based on the weights, the input class map treated as an image, to so obtain the refined class map of the refined segmentation result.

6. System of claim 5, wherein the said image filter (F) is configured for structure-preserving noise filtering.

7. System of any claim 6, wherein the said filter (F) is a bilateral filter.

8. System of any one of the previous claims, including a control interface (CI) configured to control medical equipment (ME) based on the refined segmentation result.

9. System of claim 8, where the system includes a display device (DD) for displaying the refined segmentation result.

10. A medical arrangement (MAR) including the system of any one of the previous claims, and further including any one or more of: i) an imaging apparatus (IA) providing the input structural image, ii) the initial segmentor (SEG).

11. Computer-implemented method of refining an image segmentation result, comprising:

   receiving (S610) a prior segmentation result segmented by an initial segmentor (SEG), the result including an input structural image, and an input class map associated with the structural image, the input class map assigning image elements of the input structural image to classes;
   refining (S620) the input class map, based on subsets of the input structural image, into a refined class map for the input structural image to so obtain the refined segmentation result; and
   providing (S630) the refined segmentation result.

12. A computer program element, which, when being executed by at least one processing unit, is adapted to cause the processing unit to perform the method as per claim 11.

13. At least one computer readable medium having stored thereon the program element of claim 12.

14. At least one computer readable medium having stored thereon the trained machine learning model (M) as per any one of claims 2-9.

**FIG. 1**

**FIG. 2**

A)

$$TD = \left\{ (Ij, pj) \right\}$$

pj

j

Ij

SEG

V

$$s(V) = (V, P)$$

s(V)

B)

P

pk

Uk

RF

$$TD' = \left\{ (Uk, pk) \right\}$$

M

FIG. 3

**FIG. 4**

**FIG. 5**

**FIG. 6**

**FIG. 7**

**FIG. 8**

Europäisches
Patentamt

European
Patent Office

Office européen
des brevets

# EUROPEAN SEARCH REPORT

Application Number

EP 22 21 2770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/333222 A1 (GATTI ANTHONY [CA]) 31 October 2019 (2019-10-31) * paragraph [0016] – paragraph [0123]; claims 1, 2; figure 2 * ----- | 1-14 | INV. G06V10/26 G06V10/30 G06V10/82 G06V10/80 |
| X | US 2019/304098 A1 (CHEN DANNY ZIYI [US] ET AL) 3 October 2019 (2019-10-03) * paragraph [0032] – paragraph [0126]; claims 1, 11; figures 10, 17 * ----- | 1-3,8,9, 11-14 | G06V10/88 |

TECHNICAL FIELDS
SEARCHED      (IPC)

G06V

The present search report has been drawn up for all claims

| Place of search | Date of completion of the search | Examiner |
|---|---|---|
| The Hague | 22 May 2023 | De Meyer, Doris Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                    

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 2770

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2023

| Patent document cited in search report | Publication date | Patent family member(s) | Publication date |
|---|---|---|---|
| US 2019333222 A1 | 31-10-2019 | CA      3041140 A1<br>US  2019333222 A1 | 26-10-2019<br>31-10-2019 |
| US 2019304098 A1 | 03-10-2019 | US  2019304098 A1<br>WO  2018111940 A1 | 03-10-2019<br>21-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997, 2
- **GUANG DENG.** Fast compressive bilateral filter. *Electronics Letters,* 2017, 53